# EUROPÄISCHE PATENTSCHRIFT

(11) **EP 1 847 587 B1**
(45) Veröffentlichungstag und Bekanntmachung des Hinweises auf die Patenterteilung: **26.05.2010**
(21) Anmeldenummer: 06007974.6
(22) Anmeldetag: 18.04.2006
(51) Int. Cl.: C10M 175/00

(54) **Verfahren zur Aufarbeitung von Altölen zu Schmierölen mit hohem Viskositätsindex**
Process for reprocessing waste oil to obtain base oils with a high viscosity index
Procédé de traitement d'huiles usées pour obtenir des huiles de base à haut indice de viscosité

(43) Veröffentlichungstag der Anmeldung: 24.10.2007
(73) Patentinhaber: Fuhse, Horst, 22926 Ahrensburg (DE)
(72) Erfinder: Fuhse, Horst, 22926 Ahrensburg (DE); Dr.Robers, Benedikt, 48703 Stadtlohn (DE)
(74) Vertreter: Hauss-Löhde, Corinne

(56) Entgegenhaltungen:
- EP-A- 0 055 492
- DE-A1- 10 111 765
- FR-A- 2 005 199
- GB-A- 1 039 973
- US-A- 2 568 583
- US-A- 4 151 072
- US-A- 4 154 670
- US-A- 6 117 309
- US-B1- 6 712 954

## Beschreibung

Altöle sind zu einem überwiegenden Teil Motorenaltöle. Diesen ist ein hoher Aschegehalt und insbesondere aus der Additivierung auch ein hoher Metall- und Phosphorgehalt gemeinsam.

Das Entfernen dieser Verbindungen kann bekanntlich mittels konzentrierter Schwefelsäure und nachfolgender Behandlung mit Bleicherde erreicht werden. Dabei bildet die Schwefelsäure durch katalytische, oxidierende und polymerisierende Wirkung ein saures, schwer zu beseitigendes so genanntes Säureharz, das wegen seines hohen Mineralölanteils einen großen Effizienzverlust des bekannten Verfahrens bewirkt.

Ein anderes Verfahren bedient sich ebenfalls der Schwefelsäure, die in verdünnter Form zugesetzt wird. Des Weiteren ist aus der DE 3900159 ein dreistufiges Verfahren bekannt, bei dem wässrige Lösungen starker Säuren dem Altöl zugeführt werden. Nach einer mehrstündigen Behandlung erfolgt bei diesem Verfahren anschließend die Trennung von Öl, Wasser und Feststoffen insbesondere über Dekantieren, Filtrieren und Filterpressen. Die entstehenden Metallverbindungen werden dabei im Wesentlichen ausgewaschen. Dies kann bekanntlich auch dadurch erreicht werden, dass die Metalle der Additivverbindungen in schwer lösliche Phosphate umgesetzt und dann mit der wässrigen Phase ausgeschieden werden.

Auch in anderen (Solvent)-Verfahren werden die Additive nach Verdünnung der Altöle mit dem Lösungsmittel ausgefällt, wonach das Gemisch zur weiteren Verarbeitung wieder vom Lösungsmittel befreit werden muss.

Demgegenüber liegt der vorliegenden Erfindung die Aufgabe zugrunde, die Verfahren zur Aufarbeitung von Altölen grundlegend zu verbessern und insbesondere ein Verfahren zur Aufarbeitung von Altölen zu Schmierölen zu schaffen, dessen Produkt höherwertig ist und dessen Rückstände weniger bedenklich sind.

Diese Aufgabe wird erfingdungsgemäß von einem Verfahren mit den Merkmalen des Anspruchs 1 gelöst. Bevorzugte Ausgestaltungen sind in den Unteransprüchen angegeben.

Erfindungsgemäß wird unter einem Aspekt der Erfindung in das Altöl, in einem vorzugsweise vollständig kontinuierlich arbeitenden Prozesses und vorzugsweise nach destillativer Entfernung von Wasser und Leichtsiedern, online eine genau berechnete Menge, vorzugsweise 0,5 bis 2 % einer bifunktionellen organisch-chemischen Stickstoff-Sauerstoff-Verbindung injiziert, um Reaktionen auszulösen, die zur Koagulation unerwünschter Ölbestandteile führen. So können erfindungsgemäß in einem einzigen Schritt auf chemischem Wege sämtliche Aschebildner (also nicht nur Metalle, sondern auch die phosphorhaltigen Verbindungen und der im Altöl enthaltene Ruß) vollständig entfernt werden. Darüber hinaus kann mittels dieses erfindungsgemäßen Verfahrens eine Reduzierung des Chlorgehaltes gelingen.

Die Zugabe erfolgt vorzugsweise bei Temperaturen von 80 °C bis 200°C. Insbesondere Ruß und phosphorhaltige Verbindungen, sowie erhebliche Anteile der chlorhaltigen Verbindungen, können auf diesem Weg leicht vom Öl getrennt werden können. Zur Gruppe der wirksamen bifunktionellen organisch-chemischen Stickstoff-Sauerstoff-Verbindungen zählen insbesondere die substituierten und unsubstituierten Alkanolamine, sowie Mischungen dieser Verbindungen mit dipolar aprotischen Substanzen aus der Familie der einfach oder zweifach substituierten Formamide und Acetamide

Unter einem weiteren Aspekt der Erfindung werden zeitgleich zur Zugabe der bifunktionellen organisch-chemischen Stickstoff-Sauerstoff-Verbindungen wässrige Phosphorsäure oder wässrige Lösungen ihrer Salze dem Öl zugeführt. Sowohl die Zugabe der wässrigen Säure- und/oder Salzlösung, als auch das Eindüsen der Stickstoff-Sauerstoff-Verbindungen erfolgt vorzugsweise bei einer Temperatur, die über deren Siedepunkten liegt, vorzugsweise bei Öltemperaturen zwischen 150 °C und 200 °C, insbesondere zwischen 160 °C und 170 °C, und überführt sämtliche metall-, phosphor- und einen erheblichen Anteil der chlorhaltigen Verbindungen in eine leicht abtrennbare Form. Die Injektion wird vorzugsweise bei Drücken bis zu 10 bar durchgeführt, da auf diese Weise ein sofortiges Verdampfen des Wasseranteils der Säure- und/oder Salzlösungen und der Stickstoff-Sauerstoffverbindungen verhindert wird und eine Vermischung mit dem Öl auch bei den hohen Temperaturen noch möglich ist. Nach Durchlaufen einer kurzen Mischstrecke (von zum Beispiel 0,1 m bis 1 m) wird der auf dem System lastende Druck schlagartig entfernt und der durch Verdampfen herbei geführte Wasserentzug erzwingt augenblicklich die Bildung der metall-, phosphor-, chlor- und rußhaltigen Konglomerate. Diese Verfahrensweise erlaubt es, die Kontaktzeiten zwischen den eingesetzten Substanzen und dem Öl extrem zu verkürzen (es wurden zum Beispiel 1 bis 10 Sekunden realisiert) und führt darüber hinaus zu einer außerordentlich kurzen Zeitspanne bis die gewünschten Reaktionen zum Abschluss gebracht sind.

Die erfindungsgemäß äußerst schnell ablaufenden Reaktionen bewirken vorteilhaft, diesen Verfahrensschritt online durchführen zu können, und lässt die wässrige Lösung so mit den Bestandteilen des Altöl-Rohstoffs reagieren, dass das Reaktions- oder Umsetzungsprodukt in Konglomeraten anfällt, die aufgrund ihrer Größe und/oder ihres Gewichts sogar nur durch Sedimentation besonders einfach abgetrennt werden können.

Als Rohstoff ist für dieses erfindungsgemäße Verfahren z. B. ein übliches Altölgemisch aus verschiedenen Schmierölen verwendbar. Zur Optimierung der Ausbeute kann zuvor eine Altöl-Sortenauswahl durchgeführt werden. Das Verfahren kann über mehrere Verfahrensstufen jeweils Basisöle für die Herstellung von Motorenschmierölen mit einem Viskositätsindex von 120 bis über 145 erzeugen. Jede seiner möglichen drei Hauptstufen liefert ein verkaufsfähiges Schmieröl, das existierenden Schmierstoffnormen entspricht. Besonders vorteilhaft ist der durch die Verfahrensführung einstellbare hohe Viskositätsindex.

Das Gemisch kann nach der erfindungsgemäßen Abtrennung in Absitzbehälter gepumpt werden oder wird vorzugsweise im Online-Betrieb über Filter, aber auch Zentrifugen oder andere Phasentrenngeräte geleitet. Das von den Umsetzungsprodukten befreite so genannte Basol ist transparent, hat eine Asche von weniger als 0,02 % einen Viskositätsindex von mehr als 120 und ist praktisch metallfrei. Neben seiner Verwendung als Schmierstoff ist es auch als Catfeed für eine nachfolgende Hydrierung geeignet.

Das Rückstands- oder Umsetzungsprodukt, das bei der Abscheidung der Additive anfällt, ist ein pastöses, ölhaltiges Material. Es lässt sich nach einer weiteren Behandlung, z. B. mit den bei der Trocknung angefallenen leichten Fraktionen, durch Herauslösen von den mitausgeschiedenen Mineralölanteilen befreien und zu einem Pulver reduzieren. Die nach der Trennung anfallende flüssige Phase kann dem Altöl anschließend ohne Schaden wieder zugegeben werden. Der als einziges Reaktionsprodukt dieser Raffination anfallende pulverige Rückstand enthält inerte Reaktionsprodukte der umgesetzten gesetzten Additive. Das anfallende Pulver besteht im wesentlichen aus reinem Kohlenstoff und den Umsetzungsprodukten der Additive. Es hat einen hohen Phosphatanteil.

Das erfindungsgemäße Verfahren einschließlich seiner Varianten und Alternativen hat mehrere Vorteile. Es kann "online" durchgeführt werden. Weil auch der Rückstand einer wahlweise nachfolgenden Vakuumdestillation als hochwertiger Plastifikator mit hervorragenden Eigenschaften alternativ zu teueren Polimerisaten verwendbar ist, ermöglicht dieses Verfahren besonders vorteilhaft die vollständige Nutzung aller bei der Aufarbeitung des Altöls anfallenden Produkte.

## Patentansprüche

1. Verfahren zur Verarbeitung von Altölen, insbesondere zur Aufarbeitung der Altöle zu Schmierölen, **dadurch gekennzeichnet, dass** durch Eindüsen dem Altöl bifunktionelle organisch-chemische Stickstoff-Sauerstoff-Verbindungen aus der Gruppe der Alkanolamine und/oder Mischungen dieser Verbindungen mit dipolaren aprotischen Substanzen aus der Familie der Formamide und Acetamide zugefügt werden, sowie Phosphorsäure oder ein Phosphorsalz in wässriger Lösung bei einer über dem Siedepunkt der wässrigen Lösung liegenden Öltemperatur und bei Drücken bis 10 bar zugefügt werden, so dass ein sofortiges Verdampfen des Wasseranteils der Säure- und/oder Salzlösung und der Stickstoff Sauerstoffverbindungen verhindert wird und eine Vermischung mit dem Öl möglich ist, und dass der auf dem System lastende Druck nach dem Zufügen schlagartig entfernt wird.

2. Verfahren nach Anspruch 1 **dadurch gekennzeichnet, dass** durch das Eindüsen der bifunktionellen organisch-chemischen Stickstoff Sauerstoff Verbindungen in einem einzigen Schritt auf chemischem Weg sämtliche Aschebildner, Ruß und/oder mindestens ein Anteil der chlorhaltigen Verbindungen aus dem Altöl entfernt werden.

3. Verfahren nach einem der vorhergehenden Ansprüche, **dadurch gekennzeichnet, dass** die bifunktionellen organisch-chemischen Stickstoff-Sauerstoff-Verbindungen in einer Menge von 0,5 bis 2 % zugefügt werden.

4. Verfahren nach einem der vorhergehenden Ansprüche, **dadurch gekennzeichnet, dass** die bifunktionellen organisch-chemischen Stickstoff-Sauerstoff-Verbindungen bei Temperaturen von 80 °C bis 200 °C zugefügt werden.

5. Verfahren nach einem der vorhergehenden Ansprüche, **dadurch gekennzeichnet, dass** insbesondere zeitgleich zur Zugabe bifunktioneller organisch-chemischen Stickstoff-Sauerstoff-Verbindungen die Phosphorsäure oder das Phosphorsalz in wässriger Lösung in das Altöl bei Öltemperaturen oberhalb des Siedepunkts der wässrigen Lösung durch Eindüsen zugefügt wird.

6. Verfahren nach Anspruch 5, **dadurch gekennzeichnet, dass** die Phosphorsäure oder das Phosphorsalz in einer Menge von 0,5 bis 5 % zugefügt wird.

7. Verfahren nach einem der Ansprüche 6 oder 5 **dadurch gekennzeichnet, dass** die Phosphorsäure oder das Phosphorsalz bei Temperaturen des Altöls zwischen 150 °C und 200 °C, insbesondere zwischen 160 °C und 170 °C, zugefügt wird.

8. Verfahren nach einem der vorhergehenden Ansprüche, **dadurch gekennzeichnet, dass** das Zufügen durchgeführt wird, nachdem in einer Reaktionsstufe der Gasöl-Anteil destillativ abgetrennt wurde.

9. Verfahren nach einem der vorhergehenden Ansprüche, **dadurch gekennzeichnet, dass** das Zufügen durchgeführt wird, nachdem leicht siedende Bestandteile, insbesondere Lösungsmittel und leichten Kohlenwasserstoffe, insbesondere Benzin, abgetrennt wurden.

10. Verfahren nach einem der vorhergehenden Ansprüche, **dadurch gekennzeichnet, dass** das Gemisch aus dem Altöl und der Zufügung zum Trennen in Absitzbehälter gepumpt oder online über Filter, Zentrifugen oder andere Phasentrenngeräte geleitet wird.

11. Verfahren nach einem der vorhergehenden Ansprüche, **dadurch gekennzeichnet, dass** das Rückstands- oder Umsetzungsprodukt, das nach dem Zufügen bei der Trennung der Additive anfällt, zu einem Pulver reduziert wird.

12. Verfahren nach einem der vorhergehenden Ansprüche, **dadurch gekennzeichnet, dass** die mitausgeschiedenen Mineralölanteile des Rückstands- oder Umsetzungsprodukts, das nach dem Zufügen bei der Trennung der Additive anfällt, als flüssige Phase dem Altöl wieder zugegeben wird.

## Claims

1. Process for reprocessing used oils, especially for reprocessing used oils to obtain lubricant oils, **characterized in that** bifunctional organic nitrogen-oxygen compounds from the group of the alkanolamines and/or mixtures of these compounds with dipolar aprotic substances from the family of the formamides and acetamides are added to the used oil by injection, as is phosphoric acid or a phosphorus salt in aqueous solution, at an oil temperature above the boiling point of the aqueous solution and at pressures up to 10 bar, such that immediate vaporization of the water content of the acid and/or salt solution is prevented and mixing with the oil is possible, and that the pressure on the system is abruptly released after the addition.

2. Process according to Claim 1, **characterized in that** injection of the bifunctional organic nitrogen-oxygen compounds removes, in a single step by a chemical route, all ash formers, soot and/or at least a proportion of the chlorine compounds from the used oil.

3. Process according to either of the preceding claims, **characterized in that** the bifunctional organic nitrogen-oxygen compounds are added in an amount of 0.5 to 2%.

4. Process according to any of the preceding claims, **characterized in that** the bifunctional organic nitrogen-oxygen compounds are added at temperatures of 80°C to 200°C.

5. Process according to any of the preceding claims, **characterized in that** the phosphoric acid or the phosphorus salt in aqueous solution is added to the used oil by injection at oil temperatures above the boiling point of the aqueous solution, especially simultaneously with the addition of bifunctional organic nitrogen-oxygen compounds.

6. Process according to Claim 5, **characterized in that** the phosphoric acid or the phosphorus salt is added in an amount of 0.5 to 5%.

7. Process according to either of Claims 6 and 5, **characterized in that** the phosphoric acid or the phosphorus salt is added at temperatures of the used oil between 150°C and 200°C, especially between 160°C and 170°C.

8. Process according to any of the preceding claims, **characterized in that** the addition is performed after the gas oil component has been removed by distillation in a reaction stage.

9. Process according to any of the preceding claims, **characterized in that** the addition is performed after low-boiling constituents, especially solvents and light hydrocarbons, especially petroleum, have been removed.

10. Process according to any of the preceding claims, **characterized in that** the mixture of the used oil and the addition is pumped into settling vessels for separation, or is passed online through filters, centrifuges or other phase separation equipment.

11. Process according to any of the preceding claims, **characterized in that** the residue or reaction product obtained after the addition in the course of separation of the additives is reduced to a powder.

12. Process according to any of the preceding claims, **characterized in that** the mineral oil components which have also been separated out in the residue or reaction product obtained after the addition in the course of separation of the additives is added again to the used oil as a liquid phase.

## Revendications

1. Procédé pour la transformation d'huiles usées, en particulier pour la transformation d'huiles usées en huiles lubrifiantes, **caractérisé en ce qu'**on ajoute par injection à l'huile usagée des composés organochimiques divalents à base d'azote-oxygène du groupe des alcanolamines et/ou de mélanges de ces composés avec des substances aprotiques dipolaires de la famille des formamides et acétamides, ainsi que de l'acide phosphorique ou un sel de phosphore en solution aqueuse, à une température de l'huile supérieure au point d'ébullition de la solution aqueuse et à des pressions jusqu'à 10 bars, de manière telle qu'une évaporation immédiate de la proportion d'eau et de la solution d'acide et/ou de sel et des composés à base d'azote-oxygène est empêchée et qu'un mélange avec l'huile est possible, et **en ce que** la pression en charge sur le système est éliminée brusquement après l'addition.

2. Procédé selon la revendication 1, **caractérisé en ce que** par l'injection des composés organochimiques difonctionnels à base d'azote-oxygène on élimine en une étape, par voie chimique, l'ensemble des agents de formation de cendres, de la suie et/ou au moins une proportion des composés chlorés de l'huile usée.

3. Procédé selon l'une quelconque des revendications précédentes, **caractérisé en ce que** les composés organochimiques difonctionnels à base d'azote-oxygène sont ajoutés en une quantité de 0,5 à 2%.

4. Procédé selon l'une quelconque des revendications précédentes, **caractérisé en ce que** les composés organochimiques difonctionnels à base d'azote-oxygène sont ajoutés à des températures de 80°C à 200°C.

5. Procédé selon l'une quelconque des revendications précédentes, **caractérisé en ce qu'**on ajoute par injection l'acide phosphorique ou le sel de phosphore en solution aqueuse en particulier en même temps que l'addition de composés organochimiques difonctionnels à base d'azote-oxygène dans l'huile usée à des températures de l'huile supérieures au point d'ébullition de la solution aqueuse.

6. Procédé selon la revendication 5, **caractérisé en ce que** l'acide phosphorique ou le sel de phosphore est ajouté en une quantité de 0,5 à 5%.

7. Procédé selon l'une quelconque des revendications 6 ou 5, **caractérisé en ce que** l'acide phosphorique ou le sel de phosphore est ajouté à des températures de l'huile usée entre 150°C et 200°C, en particulier entre 160°C et 170°C.

8. Procédé selon l'une quelconque des revendications précédentes, **caractérisé en ce que** l'addition est réalisée après que la proportion d'huile de gasoil a été séparée par distillation dans un étage de réaction.

9. Procédé selon l'une quelconque des revendications précédentes, **caractérisé en ce que** l'addition est réalisée après que des constituants à bas point d'ébullition, en particulier des solvants et des hydrocarbures légers, en particulier l'essence, ont été séparés.

10. Procédé selon l'une quelconque des revendications précédentes, **caractérisé en ce que** le mélange d'huile usée et des substances ajoutées est pompé, pour la séparation, dans un récipient de décantation ou est guidé en ligne via des filtres, des centrifugeuses ou d'autres appareils de séparation des phases.

11. Procédé selon l'une quelconque des revendications précédentes, **caractérisé en ce que** le résidu ou le produit de transformation qui est obtenu après l'addition lors de la séparation des additifs est réduit en une poudre.

12. Procédé selon l'une quelconque des revendications précédentes, **caractérisé en ce que** les proportions d'huile minérale séparées simultanément du résidu ou du produit de transformation qui est obtenu après l'addition lors de la séparation des additifs, est à nouveau ajouté à l'huile usée sous forme de phase liquide.
